# EUROPEAN PATENT APPLICATION

(11) **EP 4 408 035 A1**
(43) Date of publication of application: **31.07.2024**
(21) Application number: 23153417.3
(22) Date of filing: 26.01.2023
(51) Int. Cl.: H04W 4/029, H04W 4/06, H04W 12/08, H04W 4/20

(54) **WIRELESS MOBILE DEVICE AND LOCATOR DEVICE FOR LOCATING A TARGET WIRELESS MOBILE DEVICE IN A GROUP OF WIRELESS MOBILE DEVICES**

(71) Applicant: u-blox AG, 8800 Thalwil (CH)
(72) Inventor: Lenzarini, Davide, 8800 Thalwil (CH); Karlsson, Peter, 8800 Thalwil (CH); Jackson, Bruce, 8800 Thalwil (CH); Vigneswaran, Hariharasudhan, 8800 Thalwil (CH)
(74) Representative: Epping - Hermann - Fischer

(57) **Abstract**

A wireless mobile device in a group of wireless mobile devices, configured for wireless communication with a locator device and one or more neighbor wireless mobile devices in the group, configured to obtain a neighbor information list comprising positioning information relative to the neighbor wireless mobile devices, and broadcast a location data message comprising an identity of the wireless mobile device, the neighbor information list and a message authentication code. A locator device, configured for wireless communication with a group of wireless mobile devices and for locating a target wireless mobile device in the group, configured to determine that the target wireless mobile device is not in wireless communication with the locator device, and search for the target wireless mobile device based on the neighbor information lists in the location data messages received from the wireless mobile devices in the group until positioning information of the target wireless mobile device is found.

## Description

### TECHNICAL FIELD

This disclosure relates to a wireless mobile device and a locator device for locating a target wireless mobile device in a group of wireless mobile devices. The disclosure further relates to a positioning system comprising a group of wireless mobile devices and a locator device and to a computer program product.

### BACKGROUND ART

In many scenarios in the industry, business environments or daily life, locating assets in the surroundings is often desirable. In such applications, wireless mobile devices acting as beacon devices are associated with assets placed in the surroundings. A wireless mobile device, such as a Bluetooth device, a Wi-Fi device, a UWB (ultra-wideband) device, a mobile device or an electronic device with wireless communication capability, is able to advertise wireless signals. A wireless signal may contain a predefined message sent via wireless links regularly or on demand, such as a beacon signal. For finding a specific target asset, a locator device, such as a portable Bluetooth device, a portable Wi-Fi device, a portable UWB device, a mobile phone or a portable electronic device with wireless communication capability, moves in the surroundings to receive the wireless signals, and finds the target asset by locating the wireless mobile device associated with the target asset based on the wireless signals.

In reality, the surroundings and the placement of the assets may be complicated. Due to certain obstacles or limited signaling coverage, the locator device may not receive properly the wireless signals from the target wireless mobile device and thus fails to locate the target asset. In conventional applications, such situations are not addressed.

### SUMMARY OF INVENTION

Targeting at the problem that a target wireless mobile device may be out-of-sight in the sense that the wireless signals from the target wireless mobile device cannot be directly received by a locator device, an object to be achieved is to provide an improved positioning concept that enables locating a target wireless mobile device in a group of wireless mobile devices when the target wireless mobile device is out-of-sight of a locator device.

This object is achieved with the subject-matter of the independent claims. Embodiments and developments derive from the dependent claims.

According to the present disclosure, a group of wireless mobile devices are placed in an area, e.g. acting as beacon devices for locating associated assets. Each wireless mobile device can advertise wireless signals, and its wireless signals can be received by at least another wireless mobile device in the group. Upon receiving a wireless signal, positioning information such as received signal strength, signal arriving angle (AoA, Angle of Arrival, and/or AoD, Angle of Departure) relative to the wireless mobile device sending the signal can be estimated based on the received signal. A locator device may move around in the area to locate a target wireless mobile device when required. While moving around in the area, the locator device can receive directly the wireless signals from line-of-sight wireless mobile devices in the group. If the wireless signals from the target wireless mobile device are directly received by the locator device, positioning information can be immediately acquired by the locator device based on the directly received signals.

If the problem appears that the wireless signals from the target wireless mobile device cannot be directly received by the locator device, the improved positioning concept is based on the idea that a wireless mobile device in the group, which can receive wireless signals from neighbor wireless mobile device(s) in the group, generates a neighbor information list, NIL, comprising positioning information relative to its neighbor wireless mobile device(s), and advertises the NIL within the wireless signals. Furthermore, if a wireless mobile device A receives a wireless signal with NIL of a neighbor wireless mobile device B (denoted as NIL_B), wireless mobile device A may include NIL_B in its own NIL (denoted as NIL_A).

As the wireless signals of a wireless mobile device can be received by at least another wireless mobile device in the group, relative position of a wireless mobile device in the group can appear in at least a NIL of a different wireless mobile device and finally obtained by the locator device. In this way, if the locator device cannot receive directly the wireless signals from the target wireless mobile device to estimate positioning information directly, the locator device may search for the positioning information of the target wireless mobile device in the NILs of other wireless mobile devices.

With the NILs, positioning information of an out-of-sight target wireless mobile device can be obtained by the locator device, therefore an out-of-sight target wireless mobile device can be located in a group of wireless mobile devices.

The present disclosure provides a wireless mobile device according to the improved positioning concept. The wireless mobile device is configured for wireless communication with a locator device and one or more neighbor wireless mobile devices as a group. The wireless mobile device is configured to obtain a NIL which comprises at least one item, wherein each of the at least one item is associated with one of the one or more neighbor wireless mobile devices respectively and comprises at least an identity of the neighbor wireless mobile device and positioning information relative to the neighbor wireless mobile device. The wireless mobile device is further configured to broadcast a location data message, wherein the location data message comprises an identity of the wireless mobile device, the obtained NIL and a message authentication code.

In some implementations, at least one item in the NIL may further comprise at least a portion of a NIL received in a location data message broadcast by the associated neighbor wireless mobile device. For example, NIL_A of wireless mobile device A comprises item I_B associated with neighbor wireless mobile device B; neighbor wireless mobile device B broadcasts a location data message comprising its own NIL_B; item I_B in NIL_A may thus comprise a portion of NIL_B. In this way, positioning information of indirect neighbor wireless mobile devices can also be obtained by the wireless mobile device, so that the locator device can obtain positioning information of indirectly reached wireless mobile devices in the group.

In some implementations, for obtaining the NIL by the wireless mobile device, the wireless mobile device may be configured to receive location data messages broadcast from at least N of the one or more neighbor wireless mobile devices, wherein N is a predefined positive integer; and further configured to update the NIL to be broadcast in the location data message based on the received location data messages. The wireless mobile device is then able to obtain positioning information of indirect neighbor wireless mobile devices and include positioning information of indirect neighbor wireless mobile devices in its own NIL.

In some further implementations, when updating the NIL, the wireless mobile device may be configured to retrieve from the received location data messages the NIL of the associated neighbor wireless mobile device, include the NIL of the associated neighbor wireless mobile device in the item associated with the neighbor wireless mobile device, and detect and remove repeated copies of the NIL of the associated neighbor wireless mobile device in the items. In this way, redundant NILs can be removed, and a predefined maximum length of the location data message can be achieved which allows consistent savings on local resources.

In some further implementations, when the location data messages are received from neighbor wireless mobile devices, the wireless mobile device may be further configured to verify the received location data messages. For example, it may obtain a unique authentication key for each neighbor wireless mobile device and verify individual message authentication codes of each neighbor wireless mobile device generated using the respective unique authentication key. With the verification, the authenticity and integrity of the location data messages are ensured.

In some implementations, the wireless mobile device may be provided with an authentication key for generating individual message authentication codes, the authentication key being unique with respect to the one or more neighbor wireless mobile devices. With the authentication key, the location data messages generated by the wireless mobile device comprising the individual message authentication codes can be verified for the authenticity and integrity.

In some implementations, the wireless mobile device may be further configured to identify the one or more neighbor wireless mobile devices, estimate the position information relative to the one or more neighbor wireless mobile devices, and generate an initial version of the NIL.

In some implementations, the positioning information may include distance estimation based on received signal strength and/or channel sounding. In addition or as an alternative, the positioning information may include relative angle estimation based on signal arriving angles (AoA and/or AoD). Hence, the positioning information can be used by the locator device (or another device or entity fed with positioning information by the locator device) to locate a wireless mobile device. In case the positioning information includes signal arriving angles as AoD, the distance between the transmission antennas of each wireless mobile device in the group must be known in advance. In case it is another entity fed by the locator device with positioning information including signal arriving angles to locate a wireless mobile device, also the orientation, relative for instance to the True North, and the tilt angle of the locator device should be provided. The exact details and information required for the respective algorithms are apparent to the skilled person.

The present disclosure further provides a locator device according to the improved positioning concept. The locator device is configured for wireless communication with at least one wireless mobile device in a group of at least two wireless mobile devices and for locating a target wireless mobile device in the group. The locator device is configured to determine that the target wireless mobile device is not in wireless communication with the locator device, such that the locator device cannot directly obtain positioning information of the target wireless mobile device. The locator device is then configured to search for the target wireless mobile device until positioning information of the target wireless mobile device is found. For the searching, the locator device is configured to receive location data messages from at least one wireless mobile device in the group, wherein each of the location data messages comprises an identity of the wireless mobile device, a NIL of the wireless mobile device and a message authentication code. The NIL comprises at least one item, wherein each of the at least one item comprises at least an identity of a neighbor wireless mobile device in the group and positioning information between the wireless mobile device and the neighbor wireless mobile device. With the received location data messages, the locator device is configured to search for the item in a NIL containing an identity of the target wireless mobile device. The locator device may stop searching until positioning information of the target wireless mobile device is found.

In some implementations, at least one item in the NIL may further comprise at least a portion of a NIL of the neighbor wireless mobile device.

In some implementations, when the location data messages are received from the wireless mobile devices, the locator device may be further configured to verify the received location data messages. For example, it may obtain a unique authentication key for each wireless mobile device in the group and verify individual message authentication codes of each wireless mobile device generated using the unique authentication key.

In some implementations, the positioning information may include distance estimation based on received signal strength and/or channel sounding. In addition or as an alternative, the positioning information may include relative angle estimation based on signal arriving angles (AoA and/or AoD).

In some implementations, the locator device may be further configured to provide all of the received NILs to a positioning provider. The positioning provider may integrate the positioning information of different wireless mobile devices relative to the locator device or relative to respective neighbor wireless mobile devices and finally estimate the position of the target wireless mobile device.

According to the improved positioning concept, a positioning system may comprise a group of at least two wireless mobile devices configured according to one of the above implementations and a locator device configured according to one of the above implementations.

Furthermore, according to the improved positioning concept, a computer program may comprise instructions which, when executed on one or more processors of at least a computing device, cause the one or more processors to perform the operations of a wireless mobile device according to one of the above implementations or of a locator device according to one of the above implementations.

### BRIEF DESCRIPTION OF DRAWINGS

The improved positioning concept will be explained in more detail in the following with the aid of the drawings. Elements and functional blocks having the same or similar function bear the same reference numerals throughout the drawings. Hence their description is not necessarily repeated in the following drawings.

In the drawings:
- Figures 1a and 1b: show an example scenario of a group of wireless mobile devices and a locator device;
- Figure 2: shows an example of actions performed by a wireless mobile device;
- Figure 3: shows an example hardware implementation of a wireless mobile device;
- Figure 4: shows an example of actions performed by a locator device; and
- Figure 5: shows an example hardware implementation of a locator device.

### DETAILED DESCRIPTION

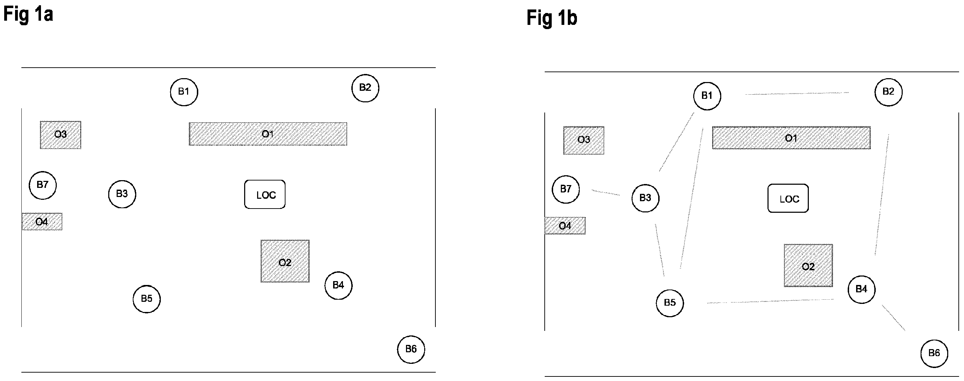

Figure 1a shows an example scenario of a group of wireless mobile devices and a locator device. At least two wireless mobile devices, for example, 10 or 20 wireless mobile devices, may form a group of wireless mobile devices. In the example shown in Figure 1a, 7 wireless mobile devices B1-B7 are deployed as a group, and placed in the area. The area may be a warehouse, a storing room, an office, a living room, etc. The wireless mobile devices may be associated individually with assets like furniture or goods, and are distributed in the area to act as beacon devices. The wireless mobile devices have wireless transmission and receiving functionalities. For example, the wireless mobile devices may be Bluetooth or Wi-Fi or UWB wireless mobile devices. The wireless mobile devices may be configured to advertise wireless signals. The wireless signals may contain predefined messages, such as beacon signals. The wireless mobile devices which are in line-of-sight with each other in an available signaling coverage can receive the advertised wireless signals from each other.

In the area, there may be distributed with obstacles like piles of objects and partition walls which may block the transmission of wireless signals, e.g., obstacles O1 to O4 in Figure 1a. However, the wireless mobile devices may be distributed in the area that, the signals of a wireless mobile device can be received by at least another wireless mobile device in the group. Such another wireless mobile device can be referred as a neighbor wireless mobile device, to be particular, it can be referred as a direct neighbor wireless mobile device. For example, in Figure 1b, the neighboring situations are shown among the wireless mobile devices in the same scenario as in Figure 1a. The dotted lines indicate that the wireless mobile devices have direct wireless communication. As shown in Figure 1b, wireless mobile device B3 has three direct neighbor wireless mobile devices, namely wireless mobile devices B1, B5 and B7. The other wireless mobile devices in the group, e.g. B2, B4 and B6 are not direct neighbor wireless mobile devices of B3, due to obstacles O1 and O2. Wireless mobile device B7 has only one neighbor B3 due to O3 and O4 around. Wireless mobile device B6 has only one neighbor B4 due to limited signaling coverage.

In some implementations, after the wireless mobile devices are placed in the area, they may be moved, for example when the associated assets are re-distributed in the area. But they may not be moved dynamically. The wireless mobile devices may be operated with battery or with power supply.

The wireless mobile devices are assigned with identities. Each wireless mobile device has a unique identity in the group.

A locator device is used to locate a target wireless mobile device in the area. The locator device is configured to receive advertised wireless signals from the wireless mobile devices. It may be operated by a user and moved around in the area for the locating. For example, a locator device LOC is moved in the area shown in Figure 1b. LOG may not be operated to move everywhere in the area. If the target wireless mobile device is wireless mobile device B3, LOG may happen to move close to it. The wireless signals can be received directly by LOG such that LOG can directly locate B3. If the target wireless mobile device is wireless mobile device B1, LOC may not be able to move close to it to receive directly its wireless signals due to obstacle O1 and cannot locate it directly.

In such scenarios, the wireless mobile devices and the locator device may be configured as follows such that the target wireless mobile device can be located directly or indirectly.

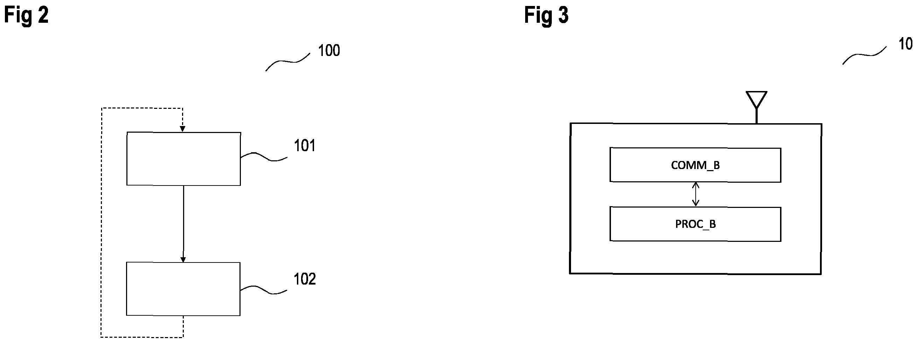

Figure 2 shows an example of actions 100 performed by a wireless mobile device in a scenario of a group of wireless mobile devices. In step 101, the wireless mobile device is configured to obtain a NIL. The NIL contains a list of items. Each item in the NIL is associated with a neighbor wireless mobile device to contain the position information relative to the associated neighbor wireless mobile device. Each item contains the identity of the neighbor wireless mobile device to indicate with which neighbor wireless mobile device the item is associated.

In some implementations, the positioning information of a neighbor wireless mobile device may be a positioning estimation by the wireless mobile device relative to the neighbor wireless mobile device. For example, the wireless mobile device may include distance estimation from the wireless mobile device to the neighbor wireless mobile device based on received signal strength, for example the received signal strength indicator (RSSI), and/or based on channel sounding procedures which bring more accurate distance estimation. The positioning information may also or alternatively include relative angle estimation based on signal arriving angles, for example the Bluetooth AoA and/or AoD. AoA or AoD data include at least Azimuth angle and/or Elevation angle and optionally angle's quality indicators and channel used. The Azimuth angle and Elevation angle can be derived from linear array antennas in 2D dimension. The relative angle estimation can be extended to 3D dimension derived from matrix array antennas. Possible positioning information for locating wireless mobile devices in 2D or 3D dimension are known to a skilled person and therefore not described in more detail here.

As an example, in Figure 1b, wireless mobile device B3 has the positioning information of three neighbor wireless mobile devices B1, B5 and B7. Table 1 shows an example of a NIL of wireless mobile device B3 (denoted as NIL_B3). The example NIL contains three items. Each item contains the information associated with the neighbor wireless mobile device, in which the identity of the neighbor and the positioning information relative to the neighbor is contained.

**Table 1: an example of a neighbor information list of wireless mobile device B3, NIL_B3.**

| | |
|---|---|
| ID_B1 | positioning information of B1 |
| ID_B5 | positioning information of B5 |
| ID_B7 | positioning information of B7 |

In some implementations, an item in a NIL may further contain complete or a portion of a NIL of a neighbor wireless mobile device. According to such implementation, the NIL of a neighbor wireless mobile device may not only contain positioning information of its neighbor wireless mobile devices, but further contain complete or portions of the NILs of its neighbor wireless mobile devices. For example, in Figure 1b, wireless mobile device B4 is a neighbor of wireless mobile device B5, and B5 has direct positioning information relative to B4. The NIL of B5 (denoted as NIL_B5) contains an item, which contains the identity of B4 and the positioning information of B4 relative to B5. NIL_B5 may be included in the item associated to B5 in NIL_B3 as shown in Table 2. Similarly, the NIL of B1 (denoted as NIL_B1) which contains an item of the identity of B2 and the positioning information of B2 relative to B1 is included in the item associated to B1 in NIL_B3 as shown in Table 2. As B7 has no further neighbor other than B3, no NIL of B7 is included in NIL_B3. In such case, NIL_B3 contains one-hop positioning information of the neighbors B1, B5 and B7, as such one-hop positioning information is estimated directly by B3, and further contains the two-hop positioning information of indirect neighbors B2 and B4. The two-hop positioning information of B2 includes the one-hop positioning information between B2 and B1 and the one-hop positioning information between B1 and B3. The two-hop positioning information of B4 includes the one-hop positioning information between B4 and B5 and the one-hop positioning information between B5 and B3. Compared with the example shown in Table 1 wherein NIL_B3 contains only one-hop positioning information, in addition to B1, B5 and B7, the position of B2 and B4 may be also inferred based only on the NIL of B3.

**Table 2: another example of a neighbor information list of wireless mobile device B3, NIL_B3.**

| | | |
|---|---|---|
| ID_B1 | positioning information of B1 | complete or a portion of NIL of B1 |
| ID_B5 | positioning information of B5 | complete or a portion of NIL of B5 |
| ID_B7 | positioning information of B7 | |

Accordingly, when a NIL of a neighbor wireless mobile device contains further NIL of its neighbor wireless mobile devices, the NIL may contain multi-hop, e.g. more than two-hop, positioning information, and positions of more wireless mobile devices, e.g., neighbors of neighbors, may be inferred.

Referring back to Figure 2, in step 102, the wireless mobile device is configured to broadcast a location data message. The location data message comprises the identity and the NIL of the wireless mobile device, and a message authentication code, MAC. An example of a location data message of the wireless mobile device B3 in Figure 1b is shown in Table 3. The NIL_B3 may contain the contents shown in Table 1 or 2.

**Table 3: an example of a location data message of wireless mobile device B3**

| | | |
|---|---|---|
| ID_B3 | NIL_B3 | MAC |

The MAC is used to protect the authenticity and integrity of the location data message. In some implementations, the wireless mobile device may be provided with an authentication key for generating individual message authentication codes, and the authentication key is unique with respect to the other wireless mobile devices in the group. The authentication key may be provisioned by a key management server. The authentication keys may be configured during manufacture, or may be preloaded during the deployment of the wireless mobile devices. With the authentication keys, MACs may be generated from full or truncated HMAC (Hash-based message authentication code), ECDSA (Elliptic Curve Digital Signature Algorithm) or chained hashes. The MACs protect the location data messages from spoofing attacks, so that the positioning information contained in the location data messages are not tampered.

The location data messages may be transmitted in the payload of wireless signals, for example, in the payload of BLE (Bluetooth Low Energy) Extended Advertising signals.

Step 101 and 102 may be performed on demand when the positioning information of the wireless mobile devices in the group is required. For instance, in a very dynamic scenario in which the wireless mobile devices are moved frequently it is important that each wireless mobile device broadcasts location data messages comprising a continuously updated NIL. In this dynamic scenario the locator device may need more time to collect the location data messages to locate the target wireless mobile device.

Step 101 and 102, or only step 102 may be performed repeatedly. In the latter case, it can be referred that the wireless mobile devices are in an operation mode. In the operation mode, the locator device may be put into action to receive the location data messages and to locate the target wireless mobile device based on the received location data messages.

In some further implementations, the wireless mobile devices may be configured to take actions in a configuration mode. In the configuration mode, the wireless mobile device may perform steps 101 and 102 repeatedly for advertising its location data messages, and in addition, perform actions of receiving location data messages from neighbor wireless mobile devices and updating its NIL based on the received location data messages.

For example, the wireless mobile device receives a location data message from at least a number of neighbor wireless mobile devices. The number of neighbor wireless mobile devices may be a predefined threshold number, for example, 1, indicating that the wireless mobile device needs to receive location data messages from at least one neighbor wireless mobile device. Upon receiving, the wireless mobile device retrieves the NIL of the neighbor wireless mobile device contained in the location data message. The NIL of the neighbor wireless mobile device may be included in the NIL of the wireless mobile device in the item associated with the neighbor wireless mobile device. In this way, multi-hop positioning information is included in the NIL of the wireless mobile device.

In addition, the wireless mobile device may further detect whether repeated NILs of a same neighbor wireless mobile device is included, and remove the repeated copies of NILs. In this way, if the payload of a wireless mobile signal has a predefined maximum length, e.g., 255 bytes for the payload of a BLE Extended Advertising signal, the length of a location data message can be reduced to fulfill the length limitation.

In some implementations, when detecting and removing repeated copies of NILs, the number of hops may be taken into account in order to retain the positioning information with the shortest hops. For example, in Figure 1b, wireless mobile device B3 has the one-hop positioning information between its neighbor wireless mobile devices B1, B5 and B7; meanwhile, wireless mobile device B1 has the one-hop positioning information between its neighbor wireless mobile devices B2, B3 and B5. B3 receives the location data messages from B5 and retrieves the NIL of B5 (denoted as NIL_B5_B3); meanwhile B3 receives the location data messages from B1 and retrieves a repeated copy of the NIL of B5 (denoted as NIL_B5_B1) contained in the NIL of B1. The NIL_B5_B1 has one more hop compared with NIL_B5_B3 with respect to B3, thus B3 may include only NIL_B5_B3 in its NIL and drop NIL_B5_B1.

The updated NIL may be broadcast in the location data messages. In the configuration mode, the receiving, updating and broadcasting may be performed in a loop, so that the NILs of all wireless mobile devices in the group can be updated. A threshold of a number of items, i.e. information of a number of neighbor wireless mobile devices, contained in the NILs may be predefined. If the threshold is reached, the updating of NILs may be stopped, and the wireless mobile device may switch to the operation mode. The threshold may be determined based on the size of the group of the wireless mobile devices, the deployment of the wireless mobile devices in the area, etc.

In some implementations, an initial version of a NIL of a wireless mobile device may be generated by the wireless mobile device. The initial version may contain only one-hop positioning information of its neighbor wireless mobile device(s). The one-hop positioning information may be estimated by the wireless mobile device as described above.

In some implementations, the NILs of the wireless mobile devices in the group may be given as configuration parameters. In this case, the wireless mobile devices may not need to estimate for the positioning information, or update the NILs as in the configuration mode. The wireless mobile devices may directly perform in the operation mode as described above.

In some implementations, the wireless mobile device may verify the location data messages upon receiving and process only the verified location data messages. For the verification, the wireless mobile device obtains a unique authentication key for each neighbor wireless mobile device, and verifies individual message authentication codes contained in the location data messages using the respective unique authentication key.

Figure 3 shows an example hardware implementation of a wireless mobile device 10. The wireless mobile device 10 may comprise a wireless communication unit COMM_B with antennas and a processing unit PROC_B. COMM_B and PROC_B may be configured to perform the actions 100 of the wireless mobile device according to the various implementations described above. COMM_B can transmit and receive wireless signals. COMM_B may be configured to perform the actions of obtaining NILs, broadcasting and receiving location data messages, obtaining authentication keys, and so on. PROC_B may be configured to perform the actions of generating and updating NILs, detecting and removing repeated copies of NILs, generating location data messages, verifying message authentication codes, identifying neighbor wireless mobile devices and estimating position information, and so on. Further configurations and developments of COMM_B and PROC_B become readily apparent for the skilled reader from the various implementations described above of the wireless mobile device.

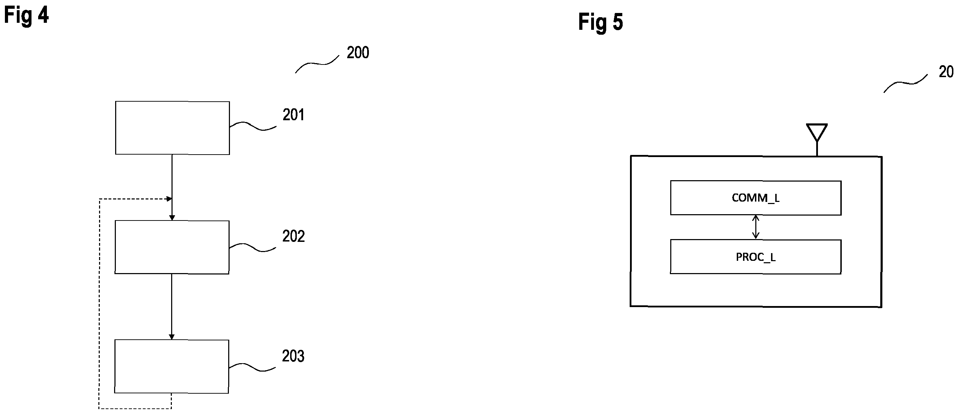

Figure 4 shows an example of actions 200 performed by a locator device for locating a target wireless mobile device in the group of wireless mobile devices. The wireless mobile devices may be configured according to the various implementations described above.

As shown in the example scenario of Figure 1b, if the locator device is required to locate the target wireless mobile device B3 and it happens to move close to it, the locator device may directly estimate the position of B3. The positioning estimation is known to a skilled person and therefore not described in more detail here. If the locator device is required to locate the target wireless mobile device B1 but cannot locate it directly, the steps shown in Figure 4 may be performed.

In step 201, the locator device is configured to determine that the target wireless mobile device is not in wireless communication with the locator device. In such case, the locator device cannot locate the target wireless mobile device directly based on wireless signals from the target device.

In such case, a searching loop is performed by the locator device. In the searching loop, steps 202 and 203 are performed repeatedly, until the target device can be located.

In step 202, the locator device is configured to receive the location data messages from at least a wireless mobile device in the group. The location data messages may be broadcast by the wireless mobile devices in the group according to the various implementations described above, which contain positioning information in the NILs.

In some implementations, the locator device may be configured to verify the received location data messages and process only the verified location data messages. For the verification, the locator device may obtain a unique authentication key for each wireless mobile device in the group, and verify individual message authentication codes contained in the location data messages using the respective unique authentication key.

In step 203, upon receiving the location data messages, the locator device is configured to search in the items in the NILs in the location data messages. If an item contains an identity equal to the identity of the target wireless mobile device, the positioning information of the target wireless mobile device can be found in the item. The locator device may stop the searching loop. In some implementations, the locator device may continue the searching loop until a predefined threshold number of items, for example 3, containing an identity equal to the identity of the target wireless mobile device is identified.

The positioning information may be any kind of positioning information described above. The positioning information may be one-hop or multi-hop positioning information contained in a NIL. For example, in Figure 1b, the target wireless mobile device may be B1 and the locator device LOC may move close to wireless mobile device B3 and receive a location data message from it, which contains one-hop positioning information of B1 in the NIL of B3. At a different occasion, LOG may move close to wireless mobile device B4 and receive a location data message from it, which contains two-hop positioning information of B1, i.e., the positioning information of B1 is contained in the NIL of B5, which is contained in the NIL of B4.

In some implementations, the locator device may collect the NILs received in the searching loop and provide them to a positioning provider using a secure channel protecting at least integrity and authenticity. In addition, the orientation, relative for instance to the True North, and the tilt angle of the locator device may be provided to the positioning provider. The positioning provider may be implemented in the locator device, or may be a device directly or indirectly connected to the locator device, or may be a functional entity in an Internet or Intranet server. The accuracy of the positioning increases with the number of wireless mobile devices available in the area and by sending to the positioning provider as many NILs as possible. Furthermore, it is not required to have any time synchronization among the wireless mobile devices.

The positioning provider may use the collected NILs to infer the position of the target wireless mobile device. With the NILs of different wireless mobile devices, the relative positions can be integrated among the wireless mobile devices, a map can be built based on the relative positions of the wireless mobile devices. The position of the target wireless mobile device can be thus obtained as distance and angle relative to the locator device. The positioning estimation using the relative positions is known to a skilled person and therefore not described in more detail here. For example, algorithms for trilateration or, generally, multilateration, as well as triangulation and their combination are well known in the art.

In some implementations, after the position of the target wireless mobile device is obtained, the position may be provided back to the locator device, or provided to other entities, e.g. a cloud server, a customer appliance, etc. using a secure channel protecting at least integrity and authenticity.

Figure 5 shows an example hardware implementation of a locator device 20. The locator device 20 may comprise a wireless communication unit COMM_L with antennas and a processing unit PROC_L. COMM_L and PROC_L may be configured to perform the actions 200 of the locator device according to the various implementations described above. COMM_L can transmit and receive wireless signals. COMM_L may further comprise antenna arrays for angle estimation. COMM_L may further comprise a network modem module for Intranet and/or Internet communication with a positioning provider. The Intranet or the Internet communication may be also used for configuration of the locator device 20 during production time. COMM_L may be configured to perform the actions of receiving location data messages, obtaining authentication keys, providing NILs to the positioning provider, and so on.

PROC_L may be configured to perform the actions of searching for the item of the target wireless mobile device, estimating position information, verifying message authentication codes, and so on. Further configurations and developments of COMM_L and PROC_L become readily apparent for the skilled reader from the various implementations described above of the locator device.

For locating a target wireless mobile device, a positioning system may be configured comprising a group of wireless mobile devices configured according to the various implementations described above, and a locator device configured according to the various implementations described above. The positioning system may further comprise a positioning provider described above. Further implementations and developments in the positioning system become readily apparent for the skilled reader from the various implementations described above of the wireless mobile device and the locator device.

Hence, with the various implementations described above for the improved positioning concept, the position of the target wireless mobile device can be inferred from information of relative positions among the group of wireless mobile devices when the target wireless mobile device is out-of-sight of a locator device and no direct positioning information can be obtained from the locator device.

Various embodiments of the improved positioning concept can be implemented in the form of logic in software or hardware or a combination of both. The logic may be stored in a computer readable or machine-readable storage medium as a set of instructions adapted to direct one or more processors of an information-processing device to perform a set of steps disclosed in embodiments of the improved positioning concept. The logic may form part of a computer program product adapted to direct an information-processing device to automatically perform a set of steps disclosed in embodiments of the improved positioning concept.

The specification and drawings are, accordingly, to be regarded in an illustrative rather than a restrictive sense. However, it will be evident that various modifications and changes may be made thereunto without departing from the scope of the invention as set forth in the claims.

### LIST OF REFERENCE SIGNS

- B1-B7: wireless mobile devices
- LOC: locator device
- O1-O4: obstacles
- 101-102, 201-203: actions
- COMM_B, COMM_L: communication unit
- PROC_B, PROC_L: processing unit

## Claims

1. A wireless mobile device (10), configured for wireless communication with a locator device and one or more neighbor wireless mobile devices, the wireless mobile device being configured to
- obtain a neighbor information list, wherein the neighbor information list comprises at least one item, wherein each of the at least one item is associated with one of the one or more neighbor wireless mobile devices respectively and comprises at least:
- an identity of the neighbor wireless mobile device; and
- positioning information relative to the neighbor wireless mobile device;
- and broadcast a location data message, wherein the location data message comprises:
- an identity of the wireless mobile device;
- the obtained neighbor information list; and
- a message authentication code.

2. The wireless mobile device according to claim 1, wherein at least one item in the neighbor information list further comprises at least a portion of a neighbor information list received in a location data message broadcast by the associated neighbor wireless mobile device.

3. The wireless mobile device according to claim 1 or 2, wherein obtaining the neighbor information list comprises:
- receiving location data messages broadcast from at least N of the one or more neighbor wireless mobile devices, wherein N is a predefined positive integer; and
- updating the neighbor information list to be broadcast in the location data message based on the received location data messages.

4. The wireless mobile device according to claim 3, wherein updating the neighbor information list comprises:
- retrieving from the received location data messages the neighbor information list of the associated neighbor wireless mobile device;
- including the neighbor information list of the associated neighbor wireless mobile device in the item associated with the neighbor wireless mobile device; and
- detecting and removing repeated copies of the neighbor information list of the associated neighbor wireless mobile device in the items.

5. The wireless mobile device according to one of claims 3 to 4, further configured to verify the location data messages broadcast by each neighbor wireless mobile device, wherein verifying the location data messages comprises:
- obtaining a unique authentication key for each neighbor wireless mobile device; and
- verifying individual message authentication codes of each neighbor wireless mobile device generated using the respective unique authentication key.

6. The wireless mobile device according to one of claims 1 to 5, wherein the wireless mobile device is provided with an authentication key for generating individual message authentication codes, the authentication key being unique with respect to the one or more neighbor wireless mobile devices.

7. The wireless mobile device according to one of claims 1 to 6, wherein obtaining the neighbor information list further comprises:
- identifying the one or more neighbor wireless mobile devices;
- estimating the position information relative to the one or more neighbor wireless mobile devices; and
- generating an initial version of the neighbor information list.

8. The wireless mobile device according to one of claims 1 to 7, wherein the positioning information includes at least one of:
- distance estimation based on received signal strength and/or channel sounding; and
- relative angle estimation based on signal arriving angles.

9. A locator device (20), configured for wireless communication with at least one wireless mobile device in a group of at least two wireless mobile devices and for locating a target wireless mobile device in the group, the locator device being configured to
- determine that the target wireless mobile device is not in wireless communication with the locator device;
- search for the target wireless mobile device until positioning information of the target wireless mobile device is found, wherein the searching comprises:
- receiving location data messages from at least one wireless mobile device in the group, wherein each of the location data messages comprises:
- an identity of the wireless mobile device;
- a neighbor information list of the wireless mobile device, wherein the neighbor information list comprises at least one item, wherein each of the at least one item comprises at least an identity of a neighbor wireless mobile device in the group and positioning information between the wireless mobile device and the neighbor wireless mobile device; and
- a message authentication code;
- searching for the item in the neighbor information list in the location data messages containing an identity of the target wireless mobile device.

10. The locator device according to claim 9, wherein at least one item in the neighbor information list further comprises at least a portion of a neighbor information list of the neighbor wireless mobile device.

11. The locator device according to claim 9 or 10, further configured to verify the location data messages broadcast by each wireless mobile device in the group, wherein verifying the location data messages comprises:
- obtaining a unique authentication key for each wireless mobile device in the group; and
- verifying individual message authentication codes of each wireless mobile device generated using the unique authentication key.

12. The locator device according to one of claims 9 to 11, wherein the positioning information includes at least one of:
- distance estimation based on received signal strength and/or channel sounding; and
- relative angle estimation based on signal arriving angles.

13. The locator device according to one of claims 9 to 12, further configured to provide all of the received neighbor information lists to a positioning provider.

14. A positioning system, comprising a group of at least two wireless mobile devices configured according to any one of claims 1 to 8 and a locator device configured according to any one of claims 9 to 13.

15. A computer program comprising instructions which, when executed on one or more processors of at least a computing device, cause the one or more processors to perform the operations of a wireless mobile device according to any one of claims 1 to 8 or of a locator device according to any one of claims 9 to 13.
